Europäisches Patentamt

(19) European Patent Office

Office européen des brevets

(11) Veröffentlichungsnummer: **0 054 691**
**B1**

(12) **EUROPÄISCHE PATENTSCHRIFT**

(45) Veröffentlichungstag der Patentschrift:
16.01.85

(21) Anmeldenummer: 81108960.6

(22) Anmeldetag: 27.10.81

(51) Int. Cl.⁴: **B 01 D 45/12,** F 02 M 35/02,
**B 04 C 3/00**

(54) Zyklon-Staubabscheider für staubbeladene Abluft- oder Abgasströme.

(30) Priorität: 20.12.80 DE 3048239

(43) Veröffentlichungstag der Anmeldung:
30.06.82 Patentblatt 82/26

(45) Bekanntmachung des Hinweises auf die Patenterteilung:
16.01.85 Patentblatt 85/3

(84) Benannte Vertragsstaaten:
BE FR GB IT NL

(56) Entgegenhaltungen:
DE - C - 958 170
FR - A - 2 443 272

(73) Patentinhaber: Obermeier, Hans-Johann,
Ritterstrasse 55, D-5650 Solingen (DE)

(72) Erfinder: Obermeier, Hans-Johann, Ritterstrasse 55,
D-5650 Solingen (DE)

(74) Vertreter: Tackenberg, Karl, Dipl.-Ing., Birkenweiher 15,
D-5650 Solingen (DE)

## Beschreibung

Die Erfindung betrifft einen Zyklon-Staubabscheider zum Abscheiden grober, feiner und feinster Staubteilchen aus einem staubbeladenen Abluft- oder Abgasstrom, der von einem Ventilator mit einem Staubrohr dem Staubabscheider von oben tangential zugeführt wird, wobei die abgeschiedenen Staubteilchen in einem unter einem vertikal ausgerichteten Abscheidebehälter angebrachten Sammelbehälter aufgefangen werden und zum Abführen des Reinluft- bzw. Reingasstromes von oben zentrisch eine Rohrleitung in den Abscheidebehälter eingesetzt ist, und wobei auf den Abscheidebehälter ein rundes Oberteil aufgesetzt ist, in das das Staubrohr tangential mündet.

Es ist bekannt, kleine Teilchen aus staubbeladener Luft zum Zwecke der Reinigung der Luft von Werkstatträumen oder aus Rauchgasen in Zyklonabscheidern zu trennen und in einen Sammelbehälter abzuscheiden. Einem solchen, als rotationssymetrischen Behälter ausgebildeten Zyklonabscheider wird die staubbeladene Luft im oberen Teil von einem Ventilator kommend mit hoher Geschwindigkeit exzentrisch zugeführt, so dass die schwereren Staubteilchen unter der Wirkung der Zentrifugalkräfte nach aussen an die Wand des Behälters geführt werden und die gereinigten Gase durch ein im oberen Teil des Behälters zentrisch eingesetztes Tauchrohr abgeführt werden können. Die Staubteilchen werden durch Reibung an der Behälterwand in ihrer kreisrunden Bewegung gehemmt und gelangen, langsam herabfallend, in einen unter dem Abscheidebehälter angeordneten Sammelbehälter, aus dem sie leicht entfernt werden können.

Bei einem aus der DE-A 2 925 245 bekannten Staubabscheider der eingangs beschriebenen Art werden ein Gasstaubstrom und ein Gasstrom einem runden Oberteil exzentrisch und getrennt zugeführt und in koaxialen Ringräumen nach dem Eintritt in den Abscheiderraum vereinigt, wobei der Gasstaubstrom radial aussen und der Gasstrom radial innen liegt.

Aus der DE-C 958 170 ist ein Fliehkraftstaubabscheider mit horizontaler Achslage bekannt, bei dem einem spiralförmigen Gehäuse ein Staubgasgemisch zugeführt wird. Ein achsparalleler Schlitz am äusseren Umfang des Abscheiders schält einen mit Staub angereicherten Teilgasstrom ab, der einem Abscheider zugeleitet wird, während der übrige Gasstrom in einen Schornstein geblasen wird.

Die bekannten Staubabscheider haben sich jedoch dann nicht bewährt, wenn nicht nur grober, sondern auch feiner Staub durch einen Zyklonabscheider möglichst restlos abgeschieden werden soll, wenn der Staub mit grossen Luftmengen transportiert werden muss.

Die Aufgabe der Erfindung besteht darin, einen Zyklon-Staubabscheider zu schaffen, der eine optimale Abscheidung von grobem, feinem und feinstem Staub auch dann gewährleistet, wenn grosse Staubluftmengen bewältigt werden müssen. Dabei soll eine niedrige Bauhöhe eingehalten werden, so dass der Staubabscheider in Arbeitsräumen, d.h. innerhalb eines Gebäudes, untergebracht werden kann.

Diese Aufgabe wird erfindungsgemäss durch die in den Patentansprüchen angegebenen Merkmale gelöst.

Der gemäss der Erfindung ausgebildete Zyklon-Staubabscheider erfüllt die gestellten Anforderungen in hervorragender Weise und besitzt darüber hinaus den Vorteil, dass die Reinluft zum Teil unmittelbar dem Arbeitsraum zugeführt werden kann, in dem der Staubabscheider aufgestellt ist, und zum anderen Teil weiteren Arbeitsräumen zugeführt werden kann, aus denen ein staubbeladener Luftstrom abgesaugt wurde.

Ein anderer Vorteil der Erfindung besteht darin, dass eine wesentlich grössere Luftmenge als bisher zum Tragen des Staubes in den Zyklon-Staubabscheider hinein verwendet werden kann, die dann im Oberteil des Abscheiders durch eine an vorteilhafter Stelle angebrachte Öffnung in einen ringförmigen Abscheider entweichen kann, ohne dass hierbei eine grössere Menge Staubteilchen mitgerissen wird. Durch die Anbringung der Öffnung im Oberteil des Abscheiders tritt eine beträchtliche Druckentlastung ein. Dadurch wird es möglich, eine verhältnismässig, d.h. für die ausgelegte Grösse des Staubabscheiders grössere Menge Staubluft zu verarbeiten sowie eine Beruhigung des Staubluftstromes und dadurch eine verbesserte Staubabscheidung in den Sammelbehälter hinein zu erreichen.

Die Abscheidung des Staubes wird erfindungsgemäss in zwei Stufen durchgeführt. Bekanntlich werden Staubteilchen durch Rotation eines Staubluftgemisches nach aussen versetzt. Von diesem Vorgang wird sowohl im Oberteil als auch im konusförmigen Abscheidebehälter Gebrauch gemacht. Im Oberteil wird der äussere, mit relativ viel Staub beladene Luftstrom von einem besonderen Kanal abgenommen, der an der Aussenwand des Oberteiles beginnt. Dieser Kanal wird aus dem Oberteil nach unten heraus und wendelförmig in den konusförmigen Abscheidebehälter geführt, wo der grösste Staubanteil aus dem Luftstrom ausgeschieden wird und in den unter dem Abscheidebehälter luftdicht angebrachten Staub-Sammelbehälter fällt.

Auch wenn dem erfindungsgemäss ausgebildeten Staubabscheider eine relativ grosse Luftmenge zugeführt wird und obwohl zugleich die Bauhöhe gegenüber bekannten Staubabscheidern stark verringert ist, kann ein Staubabscheidegrad von über 99% erreicht werden.

Die vorstehend aufgeführten und weitere Einzelheiten der Erfindung sind anhand der beigefügten Zeichnungen nachfolgend erläutert. In der Zeichnung zeigen:

Fig. 1 das Oberteil eines Staubabscheiders in Ansicht von oben,

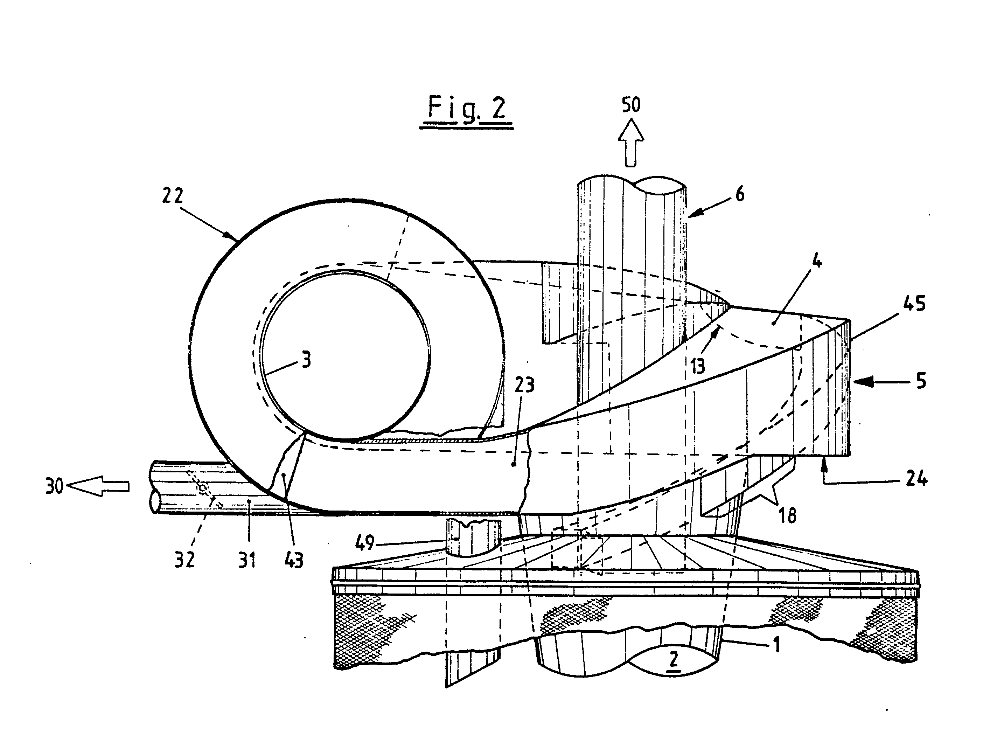

Fig. 2 das in Fig. 1 dargestellte Oberteil in Ansicht von einer Seite, und zwar auf den Anschluss für ein Rohr mit Staubluft-Gemisch,

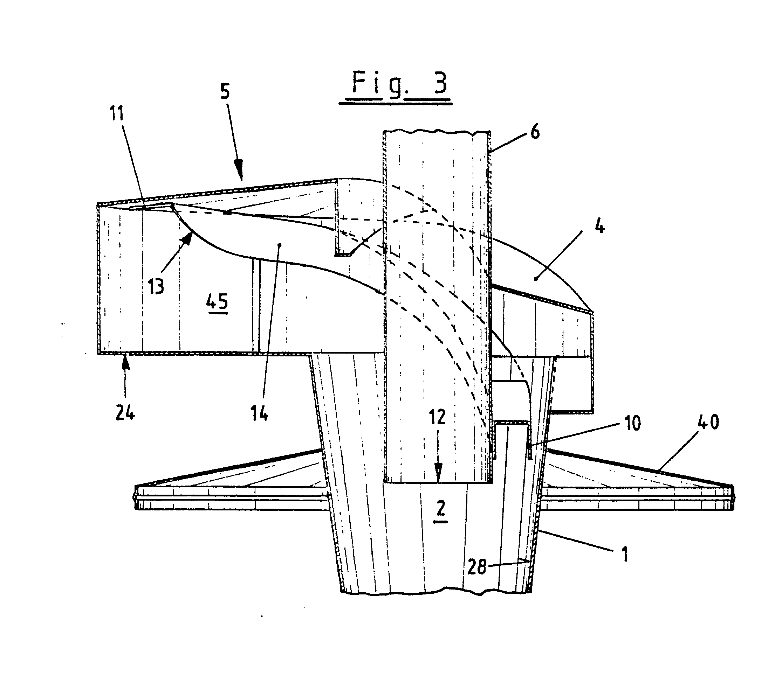

Fig. 3 einen schematischen Querschnitt durch das Oberteil nach der Schnittlinie III-III der Fig. 1,

Fig. 4 den gesamten Zyklon-Staubabscheider in Ansicht von einer Seite, wobei ein Teil des Filtertuches fortgelassen wurde.

Der Zyklon-Staubabscheider besteht im wesentlichen aus einem Abscheidebehälter in Form eines Konus 1, einem Oberteil 5 mit Deckel 4, einem ringförmigen Abscheider 22 mit einem Staubrohr 3 sowie am unteren Ende des Konus 1 aus einem Separierbehälter 8, einem Sammelbehälter 9 und sich zwischen einem Manteldeckel 40 und Mantelboden 41 erstreckenden Filtertuch 42 für einen den Konus 1 umgebenden Mantelraum 48. Der Zyklon-Staubabscheider ist mit vier Beinen 15 auf einer Bodenplatte 25 befestigt.

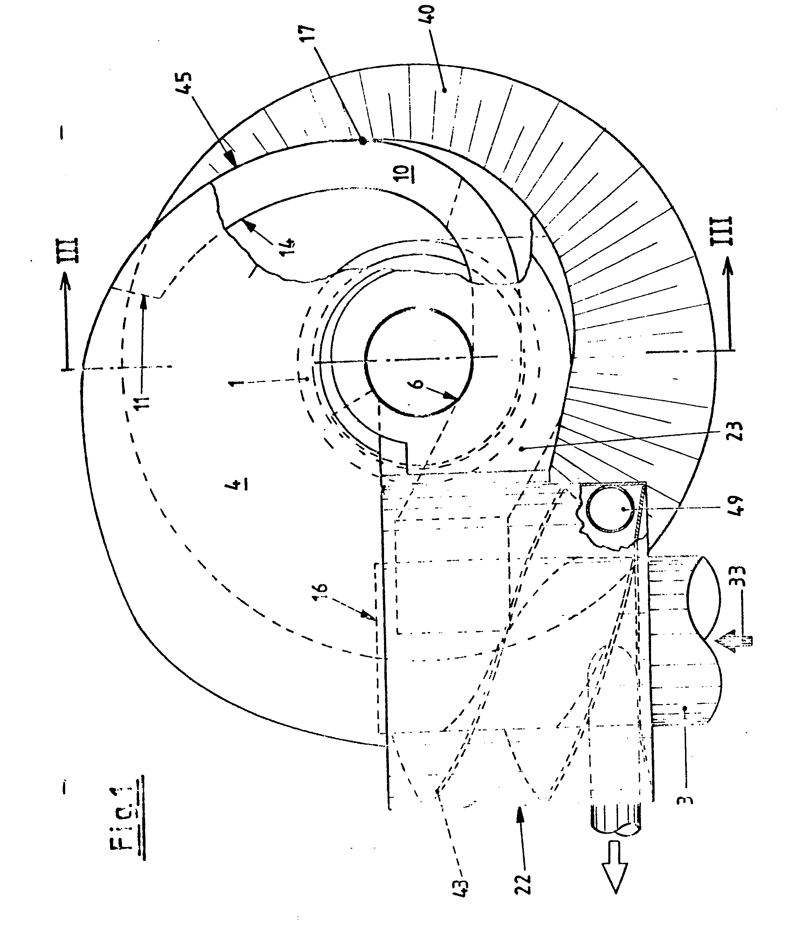

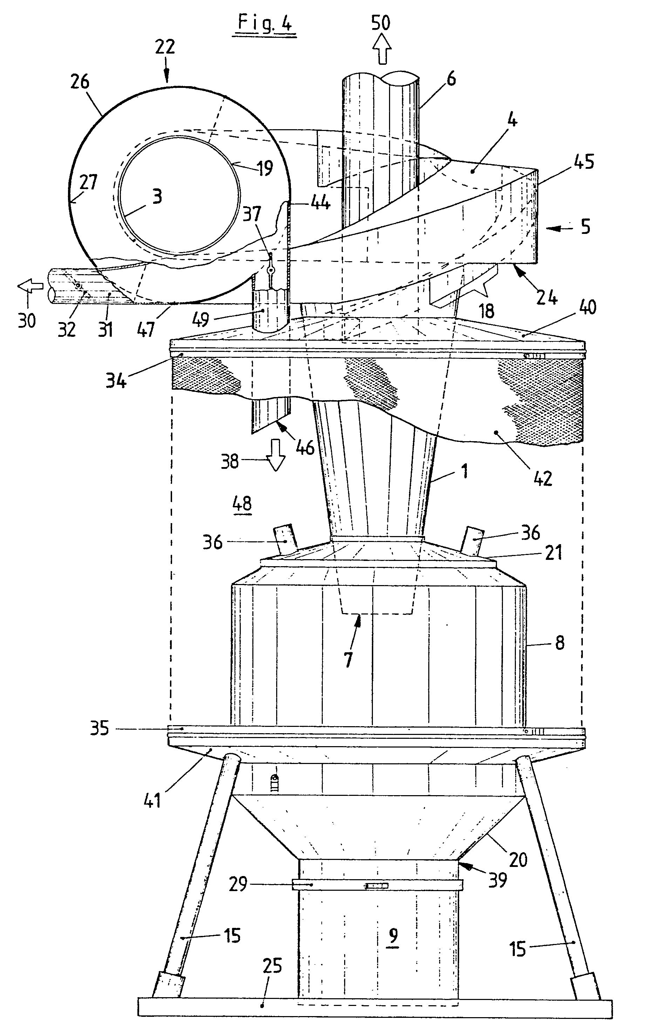

Ein staubbeladener Luftstrom wird mit hoher Geschwindigkeit in Richtung des Pfeiles 33 durch das Staubrohr 3 mit Öffnung 16 dem Oberteil 5 des Zyklon-Staubabscheiders tangential zugeführt, von wo der Strom zum einen Teil durch einen Kanal 10 in den Konus 1 zur Abscheidung der Staubteilchen eintreten kann und zum anderen Teil durch eine Leitung 23 nach einem Winkel von etwa 270° bei etwa kreisförmiger, geneigter, d.h. wendelförmiger Führung einem kreisförmigen Abscheider 22 zugeleitet wird. Der wendelförmig nach unten geführte Kanal 10 beginnt nach einem Winkel von 90 bis 120° von der Öffnung 16 des Staubrohres 3 aus gesehen bei 11 an der Aussenwand 45 des Oberteiles 5. Die Kanalwand 14 ist am Anfang mit einer Abschrägung 13 versehen. Der Kanal 10 ist unten offen und vom Punkt 17 (Fig. 1) an wendelförmig nach innen und unten durch den Boden 24 des Oberteiles 5 hindurch zum Konus 1 und in den Abscheideraum 2 hineingeführt. Hierbei ist der Kanal 10 im Bereich 18 auch unten abgedeckt, d.h. im Querschnitt rechteckig ausgebildet, nach dem Eintritt in den Abscheideraum 2 jedoch wieder unten offen, so dass sich hier die Staubteilchen entlang der Innenwand 28 des Konus 1 abscheiden, durch den Separierbehälter 8 hindurchfallen und im Sammelbehälter 9 aufgefangen werden können. Im Abscheider 22 (Fig. 1) sind wendelförmige Leitbleche 43 zwischen der Innenseite 27 der Aussenwand 26 und der Aussenwand 19 des Staubrohres 3 angebracht, die den von der Leitung 23 kommenden Luftstrom kreisförmig zu Abgängen 44 und 47 für Rohrleitungen 49 und 31 führen (Fig. 4). Am Abscheideraum 22 ist eine erste Rohrleitung 49 angeschlossen, mit der ein Teil des bereits teilweise gereinigten Luftstromes mit den nahe der Innenseite der Aussenwand 26 entlangstreifenden restlichen Staubteilchen durch den Manteldeckel 40 hindurch dem Mantelraum 48 des Zyklon-Staubabscheiders zugeführt werden kann, wo die Staubteilchen niedergeschlagen werden. Zum Regeln dieses Luftstromes ist am Anfang der Rohrleitung 49 ein Drehschieber 37 angebracht. Am Ende der Luftführung des Abscheiders 22 ist eine zweite Rohrleitung 31 angeschlossen, die gereinigte Luft zu einem anderen Arbeitsraum führen kann, wobei diese Luftmenge mit einem Drehschieber 32 geregelt werden kann.

Der im Oberteil 5 abgeteilte Staubluftstrom, der durch den Kanal 10 in den Abscheidebehälter mit dem Konus 1 geleitet wird, scheidet die Staubteilchen wegen der Rotation entlang der Innenwand 28 des Konus 1 ab. Die hier gereinigte Luft verlässt den Abscheideraum 2 durch die Öffnung 12 der Rohrleitung 6. Die abgeschiedenen Staubteilchen fallen aus dem unteren Ende 7 des Konus 1 heraus durch den Separierbehälter 8, entlang der Innenseite des Bodenkonus 20 und in den Sammelbehälter 9. Ein Teil der dem Abscheideraum 2 mit dem Kanal 10 zugeführten Luft tritt zusammen mit den abgeschiedenen Staubteilchen am unteren Ende 7 in den Separierbehälter 8 ein und aus den Rohrstutzen 36 im Deckelblech 21 heraus in den Mantelraum 48, wodurch in vorteilhafter Weise ein Aufwirbeln der Staubteilchen beim Abscheiden in den Sammelbehälter 9 vermieden wird. Der Sammelbehälter 9 ist mit einer lösbaren Manschette 29 am Konusende 39 des Bodenkonus 20 befestigt, so dass der Sammelbehälter 9 nach Abschalten des dem Staubrohr 3 zugeführten Staubluftstromes abgenommen und entleert werden kann.

Der Mantelraum 48 ist durch das Filtertuch 42 luftdurchlässig abgedeckt. Das Filtertuch 42 ist mit Manschettenringen 34 und 35 am Manteldeckel 40 und am Mantelboden 41 lösbar befestigt. Hier wird die aus der Öffnung 46 der Rohrleitung 49 und auch die aus den Rohrstutzen 36 austretende Luft von restlichen Staubteilchen befreit und kann durch das Filtertuch 42 hindurch als Reinluft in den den Staubabscheider umgebenden Raum hineinströmen.

Der von einem nicht dargestellten Ventilator aus mehreren Räumen angesaugte Staubluftstrom wird im Oberteil 5 in zwei Ströme aufgeteilt, wobei der an der Aussenwand 45 abgenommene stark mit Staub beladene Luftstrom durch den Kanal 10 der Hauptreinigung im Konus 1 unterworfen und der wenig mit Staub beladene restliche Luftstrom einem weiteren Abscheider 22 zugeführt wird, der in raumsparender Weise um das in grossem Durchmesser vorhandene Staubrohr 3 kreisförmig herum gebaut ist. Aus diesem Abscheider 22 wird der noch wenig staub enthaltende Luftstrom (Pfeil 38) durch eine Rohrleitung 49 über den Mantelraumm 48 hindurch gefiltert in die Umgebung entlassen, während der zweifach gereinigte Luftstrom (Pfeil 30) durch eine Rohrleitung einem anderen Raum zugeführt wird. Der nach der Hauptreinigung im Konus entstehende Reinluftstrom (Pfeil 50) kann einem weiteren Raum zugeleitet werden. Hieraus entsteht der Vorteil, dass die drei Reinluftströme nach der Entstaubung — nicht wie bei älteren Staubabscheidern ins Freie geblasen werden, sondern — in den entstaubten Räumen verbleiben bzw. zu diesen Räumen zurückgeführt werden, wodurch während der kalten Jahreszeit der wertvolle Wärmeinhalt der Luft von den beheizten Arbeitsräumen erhalten bleibt.

**Patentansprüche**

1. Zyklon-Staubabscheider zum Abscheiden grober, feiner und feinster Staubteilchen aus einem staubbeladenen Abluft- oder Abgasstrom, der von einem Ventilator mit einem Staubrohr (3) dem Staubabscheider von oben tangential zugeführt wird, wobei die abgeschiedenen Staubteilchen in einem unter einem vertikal ausgerichteten Abscheidebehälter angebrachten Sammelbehälter aufgefangen werden und zum Abführen des Reinluft- bzw. des Reingasstromes von oben zentrisch eine Rohrleitung (6) in den Abscheidebehälter eingesetzt ist, und wobei auf den Abscheidebehälter ein rundes Oberteil aufgesetzt ist, in das das Staubrohr (3) tangential mündet, dadurch gekennzeichnet, dass im Oberteil (5) das Staubluftgemisch in zwei etwa kreisförmig geführte Teilströme aufgeteilt ist, wobei ein erster Teilstrom durch einen an der Aussenwand (45) des Oberteiles (5) beginnenden wendelförmig geführten Kanal (10) in den darunter befindlichen, die Form eines Konus (1) aufweisenden Abscheidebehälter geführt ist und danach ein zweiter Teilstrom nach einen Winkel von etwa 270° — ausgehend von der Öffnung (16) des Staubrohres (3) im Oberteil (5) — umfassender, kreisförmiger, geneigter Führung durch eine Leitung (23) unter dem Staubrohr (3) hindurch tangential zu einem das Staubrohr (3) umgebenden Abscheider (22) geführt ist.

2. Zyklon-Staubabscheider nach Anspruch 1, dadurch gekennzeichnet, dass die Öffnung (16) des Staubrohres (3) im Oberteil (5) mit dem Anfang (11) des Kanals (10) einen Winkel von 90 bis 120°, vorzugsweise von 110°, einschliesst.

3. Zyklon-Staubabscheider nach Anspruch 1, dadurch gekennzeichnet, dass der zweite Teilstrom im Abscheider (22) in zwei Teilströme derart aufgeteilt ist, dass eine Rohrleitung (49) den ersten Teilstrom dem Mantelraum (48) des Zyklon-Staubabscheiders und eine Rohrleitung (31) mit dem zweiten Teilstrom gereinigte Luft durch eine Rohrleitung (31) einem Arbeitsraum zuführt.

## Revendications

1. Séparateur-cyclone de poussières pour la séparation de particules de poussière grosses, fines et ultrafines d'un courant d'air ou de gaz d'échappement chargé de poussières amené tangentiellement, du haut, au séparateur de poussières pour un ventilateur avec un tuyau à poussières (3), où les particules de poussière séparées sont recueillies dans un récipient collecteur disposé sois un récipient séparateur aligné verticalement, et où un conduit (6) pour l'évacuation du courant d'air purifié ou de gaz purifié est inséré centriquement, du haut, dans le récipient séparateur qui, lui, est surmonté d'une partie supérieure ronde dans laquelle le tuyau à poussières (3) débouche tangentiellement, séparateur-cyclone de poussières caractérisé par ce que, dans la partie supérieure (5), le mélange air-poussière est divisé en deux courants partiels conduits de façon à-peu-près circulaire, dont un premier courant partiel est conduit, à travers un canal hélicoïdal (10) partant de la paroi extérieure (45) de la partie supérieure (5), dans le récipient séparateur se trouvent sous ce dernier et ayant la forme d'un cône (1), et dont ensuite un deuxième courant partiel, après avoir été conduit sur un trajet circulaire incliné embrassant un angle d'env. 270° — compté à partir de l'orifice (16) du tuyau à poussières (3) dans la partie supérieure (5) — est amené tangentiellement vers un séparateur (22) entourant le tuyau à poussières (3), en traversant un conduit (23) passant au-dessous du tuyau à poussières (3).

2. Séparateur-cyclone de poussières suivant revendication 1, caractérisé par ce que l'orifice (16) du tuyau à poussières (3) dans la partie supérieure (5) renferme, avec la naissance (11) du canal (10) un angle de 90 à 120°, de préférence de 110°.

3. Séparateur-cyclone de poussières suivant revendication 1, caractérisé par ce que le deuxième courant partiel est divisé, dans le séparateur (22), en deux courants partiels, et cela de manière qu'un conduit (49) amène le premier courant partiel à l'espace (48) formé par la chemise du séparateur-cyclone de poussières, et qu'un conduit (31) amène, avec le deuxième courant partiel, de l'air purifié par le conduit (31) à un atelier.

## Claims

1. A cyclone dust separator for exhaust air or gas streams charged with dust, which are conveyed tangentially from above by a fan with a dust pipe (3) to the dust separator, the separated particles of dust being intercepted in a collector mounted underneath a vertically oriented separating vessel, a pipe conduit (6) being inserted centrally from above into the separating vessel in order to lead off the stream of pure air or pure gas, while a round upper part, in which the dust pipe (3) opens tangentially, is mounted on the separating vessel, characterised in that in the upper part (5) the mixture of dust and air is subdivided into two partial streams which are guided approximately circularly, a first partial stream being guided through a spirally arranged channel (10), starting from the outer wall (45) of the upper part (5), into the separating vessel being in the form of a cone (1) and situated underneath the upper part, and thereafter a second partial stream, after passing along a circular and inclined path covering an angle of approximately 270° — starting from the opening (16) of the dust pipe (3) in the upper part (5) — is guided tangentially, through a conduit (23) underneath the dust pipe (3), to a separator (22) surrounding the dust pipe (3).

2. A cyclone dust separator in accordance with claim 1, characterised in that the opening (16) of the dust pipe (3) in the upper part (5) forms with the commencement (11) of the channel (10) an angle of 90 to 120°, preferably of 110°.

3. A cyclone dust separator in accordance with claim 1, characterised in that the second partial stream is subdivided in the separator (22) into two partial streams in such a manner that a pipe conduit (49) conveys the first partial stream to the casing (48) of the cyclone dust separator and a pipe conduit (31) conveys together with the second partial stream cleaned air through the pipe conduit (31) to a working space.

Fig. 1

0 054 691

Fig. 2

Fig. 3

Fig. 4